# EUROPEAN PATENT APPLICATION

(11) **EP 2 400 379 A1**
(43) Date of publication of application: **28.12.2011**
(21) Application number: 10167071.9
(22) Date of filing: 23.06.2010
(51) Int. Cl.: G06F 3/048, G06F 3/01, G06F 3/042

(54) **Graphical control of a computer by a user**

(71) Applicant: MFA Informatik AG, 4435 Niederdorf (CH)
(72) Inventor: Schneider, Andreas, 4435, Niederdorf (CH)
(74) Representative: Vossius & Partner

(57) **Abstract**

A method of controlling a computer being operatively connected to a keyboard (13) and a screen (11), comprises the steps of: displaying on the screen (11) a graphical user interface (14) having a control symbol (141), moving the control symbol (141) of the graphical user interface (14) on the screen (11), and detecting a click signal together with an associated click position of the control symbol (141). The method further comprises the steps of: providing a camera (12) being operatively connected to the computer, capturing a sequence of image frames of a predefined area by means of the camera (12), detecting a movement (221) of a predefined part of a body (22) of a user in two dimensions inside the predefined area by analyzing the sequence of image frames, and moving the control symbol (141) of the graphical user interface (14) on the screen (11) in accordance with the detected movement (221) of the predefined part of the body (22). The method according to the invention allows for a convenient precise moving of the control signal (141) by means of the predefined part of the body (22) of the user wherein the hands of the user can be kept on or above the keyboard. This makes it possible to efficiently change between typing on the keyboard and moving the control symbol (141) on the screen (11) or providing the click signal, respectively. Further, the method according to the invention allows for a sophisticated control of the computer by people having certain handicaps.

## Description

### Technical Field

The present invention relates to a method according to the preamble of independent claim 1 and more particularly to a computer program and a computer control arrangement. Such a method comprising the steps of displaying on a screen a graphical user interface having a control symbol, moving the control symbol of the graphical user interface on the screen, and detecting a click signal together with an associated click position of the control symbol can be used for controlling a computer being operatively connected to a keyboard and the screen.

### Background Art

For controlling computers or devices including computers graphical user interaction is widespread. In particular, common operating systems and computer applications include graphical user interfaces which are displayed on a screen being operatively connected to the computer to be controlled. Typically, the graphical user interfaces comprise a control symbol such as a pointer, cursor or the like which can be moved by a user. In order to initiate a specific function or action on the computer the user can provide a click signal wherein the function or action, respectively, depends on the position of the control symbol on the screen when the click symbol is provided.

In order to allow the user to move the control symbol of the graphical user interface on the screen and to provide the click signal, computers are often operatively connected to a mouse or a similar device such as a trackball or the like. By moving the mouse on a flat surface or by rolling the ball of the trackball the control symbol can be moved on the screen. Further, the click signal can be provided by pressing a corresponding button on the mouse or the trackball. For example, the mouse or the trackball can comprise two buttons to apply either a right click signal or a left click signal wherein different fingers of the hand can be used to press the different buttons. Also, it is common that click signals comprise single clicks or double clicks which correspond to two clicks performed on one click button within a certain time frame. For initiating a specific function or action as described above, the computer usually is arranged to detect the position of the control symbol and the type of click signal being, e.g., a single right click, a single left click, a double left click or the like. Taking this detected information into consideration, the computer then applies or triggers an associated function or action.

For example, many operating systems implement the action of opening a certain file or program by displaying a symbol representing the file or program on the screen. The user can move the control symbol onto this symbol on the screen and can apply a double click. The computer then triggers the associated controlling action, i.e. opening the file or program, by considering the position of the control symbol on the screen and the kind of click signal provided. As commonly know, a wide range of other actions and functions can be applied in such a manner such that the computer is controllable.

As alternative to the use of a mouse or a trackball for moving the control symbol and for providing click signals, other arrangements are also used today. In particular, taking the constraints of portable computers into account touchpads, small joysticks or the like being arranged directly on or adjacent to the keyboard are used. Such touchpads usually have a touch sensitive surfaces wherein the control symbol can be moved on the screen by moving a finger along the surface and a click signal can be provided by tipping on the surface or by clicking a button adjacent to the surface. Using such a small joystick the control symbol can be moved by tilting the joystick and a click signal can be provided by pressing the joystick.

However, with the known control arrangements for moving the control signal and for providing the click signal it is necessary that one hand - usually the right hand - is moved to this arrangement in order to operate it. This implies that the hand either completely leaves the keyboard or that it leaves a typing position and moves to the control arrangement. In particular, in situations where it is necessary to change frequently between typing and moving the control symbol or providing the click signal this can be cumbersome and time consuming. For example, in call centres often specific fields of a graphical user interface have to be filled while talking to a client.

Therefore, it is necessary that the fields are rapidly activated and that text is rapidly typed into the corresponding fields in order to be able to fluently serve the client. In such a situation a frequent movement of one of the hands to a control arrangements can slow down the whole process of serving the client.

Further, in particular with regard to portable computers the mentioned control arrangements are usually restricted in size and space such that this operation can again be cumbersome and time consuming. For example, touchpads usually are of a certain compact size in order to keep the overall size of the keyboard as small as possible. This has a drawback in moving the control symbol since either the touchpad has to be sensitively arranged such that a small movement on the touchpad induces a comparably large movement of the control symbol or the movement of the finger on the touchpad has to be repeated on the touchpad in order that the control symbol can be moved all over the screen.

Still further, the use of common control arrangements can be rather difficult for handicapped persons. For example, people having the Carpal tunnel syndrome are often not capable of holding and guiding a mouse or a similar device.

Therefore, there is a need for an improved computer control arrangement and for a method of controlling a computer allowing a convenient efficient easy movement of the control symbol of the graphical user interface on the screen and a convenient efficient easy provision of click signals.

### Disclosure of the Invention

According to the invention this need is settled by a method as it is defined by the features of independent claim 1, by a computer program as it is defined by the features of independent claim 11 and by a computer control arrangement as it is defined by the features of independent claim 20. Preferred embodiments are subject of the dependent claims.

In particular, the invention deals with a method of controlling a computer being operatively connected to a keyboard and a screen, comprising the steps of; displaying on the screen a graphical user interface having a control symbol; moving the control symbol of the graphical user interface on the screen; and detecting a click signal together with an associated click position of the control symbol. The method further comprises the steps of: providing a camera being operatively connected to the computer; capturing a sequence of image frames of a predefined area by means of the camera; detecting a movement of a predefined part of a body of a user in two dimensions inside the predefined area by analyzing the sequence of image frames; and moving the control symbol of the graphical user interface on the screen in accordance with the detected movement of the part of the body. Thereby, the computer can particularly be a workstation computer having the screen, the computer and the camera as single separatable units or a portable computer including the screen, the computer and the camera in a single unit. In a possible implementation of the method, the computer displays the graphical user interface for interaction between the user and a computer application being executed on the computer such as an operating system, system software or any other software. The control symbol can be a pointer, a cursor or the like such as a commonly used mouse pointer which can have the shape of an arrow or the like. The graphical user interface can comprise controlling and displaying elements as commonly known in the art, such as windows, icons, buttons, menus and the like. Moving the control symbol of the graphical user interface on the screen can be performed by a user, e.g., in order to identify the controlling and displaying elements of the graphical user interface for interaction.

The click signal can be provided by the user and it can be detected by the computer. It can be any signal corresponding to a commonly known mouse click or the like. Further, click signals can comprise single clicks and double clicks wherein different controlling actions can be associated by the computer to a single click and to a double click at the same click position of the control symbol on the screen. Taking the click signal and the click position into account a certain associated action or function, respectively, can be triggered, e.g., by the computer. Examples of such actions or functions, respectively, are widely known in the art and can comprise opening, closing, saving or deleting files, opening, closing, maximising, minimising or scrolling windows, placing cursors, highlighting, cutting, copying or inserting text and the like. The predefined part of the body can be any part of the body witch can be identified and conveniently moved such as, e.g., the head.

The method according to the invention allows for a convenient precise moving of the control signal by means of the predefined part of the body of the user wherein the hands of the user can be kept on or above the keyboard. This makes it possible to efficiently change between typing on the keyboard and moving the control symbol on the screen or providing the click signal, respectively. Further, the method according to the invention allows for a sophisticated control of the computer by people having certain handicaps.

Preferably, the method further comprises the step of detecting if a predefined initiating key of the keyboard is pressed wherein the control symbol of the graphical user interface is moved on the screen in accordance with the detected movement of the part of the body only while or after the initiating key of the keyboard is pressed. The initiating key can be an extra key on the keyboard particularly provided for this purpose. The initiating key can also be any other common key or a combination of keys of the keyboard. Further, the initiating key can flexibly be set such that a user can choose which key or combination of keys is to be used as initiating key. Such a detection of a predefined initiating key allows switching between a regular keyboard mode and movement control mode. Thereby, it can be switched between these two modes by pressing and releasing the initiating key, i.e., hitting the initiating key once per switching, or by pressing the initiating key while the modes to be switched, i.e., holding the initiating key, and releasing the initiating key in order to switch the modes back. In the regular keyboard mode, the keyboard is regularly used and the control symbol can, e.g., be moved by means of a mouse or another suitable control arrangement. In the movement control mode the control symbol can be moved in accordance with a movement of the predefined part of the body. Controlling the computer within two modes allows the combination of known control with the body part movement control according to the invention. Like this, the user can choose the appropriate control at any time when using the computer depending on the situation he is in.

Preferably, the click signal corresponds to a pressing of any key of a predefined set of keys of the keyboard. Thereby, the predefined set of keys can be an extra key on the keyboard particularly provided for this purpose or any other common key or a combination of keys of the keyboard. Like this, it is possible for the user to provide the click signal without using any particular control arrangement. In particular, the click signal preferably corresponds to the pressing of any key of the predefined set of keys of the keyboard only while or after the initiating key of the keyboard is pressed. Thereby, when being combined with the provision of an initiating key as described above this allows using a huge amount of the keys of the keyboard for detecting the click signal when being switched to the movement control mode, i.e. while the initiating key is held or after the initiating key is pressed. In that case, the predefined set of keys can be any keys of the keyboard besides the predefined initiating key. Like this, it is possible that the click signal can be provided by any finger of the hand at essentially every location of the keyboard.

Preferably, the predefined part of the body of the user is a hand of the user. The hand of the user can comparably easily be automatically detected such that a comparably easy recognition is possible. Further, the hand usually can be comparably precisely moved such that also the control symbol can be precisely moved. Also, when being combined with the provision of an initiating key as described above a regular use of the keyboard can be switched off in the movement control mode but the movement of the hand above the top surface of the keyboard can be transformed into a corresponding movement of the control symbol on the screen instead.

Preferably, the predefined area captured by means of the camera comprises a top side of the keyboard. The term "top side of the keyboard" as used herein relates to the side of the keyboard accessible to the hands of the user. Usually, the single keys are accessible from the top side of the keyboard and a symbol is attached to the single keys visible on the top side of the keyboard. In common operation, the top side of the keyboard usually heads essentially upwardly or is slightly inclined. The camera can be arranged to mainly cover the top side of the keyboard. Such a predefined area allows for the hand to move the control symbol without leaving the keyboard. Like this, a convenient, fast and efficient controlling of the computer is possible.

Thereby, the method preferably further comprises the steps of; predefining if the control symbol is to be moved by a left hand or by a right hand; detecting if the hand is left or right prior that the control symbol of the graphical user interface is moved on the screen; and moving the control symbol of the graphical user interface on the screen in accordance with the detected movement of the hand being left or right corresponding to the predefined hand setting. Predefining the left or right hand setting can be performed by the user such that it can also be flexibly changed in accordance with the needs of the user. The detection step prior moving the control symbol can be performed by the computer on the fly when being controlled. By this configuration, the method can conveniently be adapted for left-handed or right-handed users such that the control symbol of the graphical user interface can be moved either by the left hand or by the right hand of the user depending on the predefined settings.

Preferably, the method further comprises the steps of: detecting a movement of at least one finger of the hand in two dimensions inside the predefined area by analyzing the sequence of image frames; allocating a class to the detected movement of the at least one finger of the hand; and initiating a predefined functionality being associated to the allocated class of the detected movement of the at least one finger of the hand. Detection of the at least one finger can comprise detection of all fingers of the hand. For example, the detected movement can be a top-down movement of the index finger of the hand wherein the term "top" relates to the end of the keyboard being arranged closer to the screen and the term "down" relates to the opposite end of the keyboard. Such a top-down movement can for example be allocated to a class representing a scroll movement in a window displayed on the screen such that the scroll movement is initiated in the window by moving the index finger top-down. The same applies correspondingly for down-top, left-right or right-left movements.

Thereby, the speed of the detected movement of the at least one finger of the hand preferably is evaluated when allocating the class to the detected movement of the at least one finger of the hand. Like this, it is possible to distinguish between a fast scroll movement or a slow scroll movement for example. Further thereby, a nail of the at least one finger is detected when detecting the movement of the at least one finger of the hand in two dimensions inside the predefined area by analyzing the sequence of image frames. Such detection of the nail can be comparably easily automatically performed for example by evaluating the contrast between the nail and the rest of the finger.

A further aspect of the invention relates to a computer program being adapted to be executed on a computer which is operatively connected to a camera, a keyboard and a screen. The computer program comprises program code adapted to be executed to implement on the computer a detection unit being adapted to detect a movement of a hand in two dimensions inside a predefined area by analyzing a sequence of image frames of the predefined area captured by means of the camera, and an action unit being adapted to move a control symbol of a graphical user interface displayed on the screen in accordance with the detected movement of the hand and to detect a click signal together with an associated click position of the control symbol. Such a computer program allows for efficiently implementing and distributing the method according to the invention on a suitably equipped computer or device. As a consequence, the effects, advantages and benefits mentioned above with regard to the method according to the invention do also apply correspondingly for the computer program according to the invention. Furthermore, the preferred features of the computer program according to the invention described below allow for efficiently implementing and distributing the preferred embodiments of the method according to the invention described above on a suitably equipped computer or device. Thus, the effects, advantages and benefits mentioned above with regard to preferred features of the method according to the invention do also apply correspondingly for the preferred features of the computer program according to the invention.

Preferably, the detection unit is adapted to detect if a predefined initiating key of the keyboard is pressed and to move the control symbol of the graphical user interface on the screen in accordance with the detected movement of the predefined part of the body only while or after the initiating key of the keyboard is pressed.

Preferably, the action unit is adapted to interpret a pressing of any key of a predefined set of keys of the keyboard to be the click signal. Thereby, the action unit preferably is adapted to interpret the pressing of any key of the predefined set of keys of the keyboard to be the click signal only while or after the initiating key of the keyboard is pressed.

Preferably, the predefined part of the body of the user is a hand of the user. Thereby, the computer program preferably comprises program code adapted to be executed to implement a settings storage in which a predefined hand setting is storable defining if the control symbol is to be moved by a left hand or by a right hand, wherein the detection unit is adapted to detect if the hand is left or right prior that the control symbol of the graphical user interface is moved on the screen and the action unit is adapted to move the control symbol of the graphical user interface on the screen in accordance with the detected movement of the hand being left or right as corresponding to the predefined hand setting. By this configuration possibility, the method can be adapted for left-handed or right-handed users.

Preferably, the detection unit is adapted to detect a movement of at least one finger of the hand in two dimensions inside the predefined area by analyzing the sequence of image frames, to allocate a class to the detected movement of the at least one finger of the hand and to initiate a predefined functionality being associated to the allocated class of the detected movement of the at least one finger of the hand. Thereby, the detection unit preferably is adapted to detect the speed of the detected movement of the at least one finger of the hand and to evaluate said speed when allocating the class to the detected movement of the at least one finger of the hand. Further thereby, the detection unit preferably is adapted to detect a nail of the at least one finger when detecting the movement of the at least one finger of the hand in two dimensions inside the predefined area by analyzing the sequence of image frames.

Another further aspect of the invention relates to a computer control arrangement comprising a computer, a camera, a keyboard and a screen wherein the computer is operatively connected to the camera, the keyboard and the screen. Further, a computer program as described above is executed on the computer. Thus, the effects, advantages and benefits mentioned above with regard to computer program according to the invention do also apply correspondingly for the computer control arrangement according to the invention.

These and other aspects of the invention will be apparent from and elucidated with reference to the embodiment(s) described hereinafter.

### Brief Description of the Drawings

The method, computer program and computer control arrangement according to the invention are described in more detail hereinbelow by way of exemplary embodiments and with reference to the attached drawings, in which:
- Fig. 1: shows a schematic perspective view of a first embodiment of a computer control arrangement according to the invention during a first control action;
- Fig. 2: shows a schematic perspective view of the computer control arrangement from Fig. 1 during a second control action;
- Fig. 3: shows a schematic perspective view of a second embodiment of a computer control arrangement according to the invention during the first control action;
- Fig. 4: shows a schematic perspective view of the computer control arrangement from Fig. 3 during a third control action; and
- Fig. 5: shows a schematic view of an embodiment of a software according to the invention.

### Mode(s) for Carrying Out the Invention

In the following description certain terms are used for reasons of convenience and are not to be interpreted as limiting. The terms "right", "left", "up", "down", "under" and "above" refer to directions in the figures. The terminology comprises the explicitly mentioned terms as well as their derivations and terms with a similar meaning.

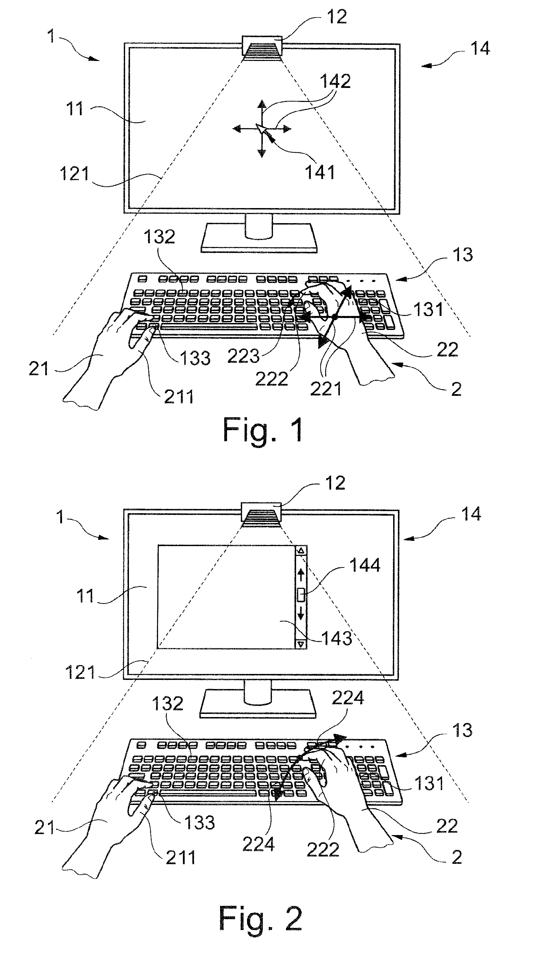

Fig. 1 shows a first embodiment of a computer control arrangement 1 having a computer which is operatively connected to a keyboard 13, a screen 11 and a camera 12. The keyboard 13 comprises a plurality of keys 132 with a block of numeric keys 131. The camera 12 is arranged on top of the screen 11 and is adjusted to cover a visual range 121 of a predefined area including the top surface of the keyboard 13. Above the keyboard 13 hands 2 of a user are visible in Fig. 1 in a position ready for typing or controlling the computer.

As commonly known in the art, the computer is arranged to display a graphical user interface (GUI) 14 comprising an arrow 141 as control symbol. The GUI 14 also comprises controlling and displaying elements such as symbols representing files and programs, windows with buttons, menus and the like as well as other similar control symbols and structures. Further, a computer program according to the invention or control software, respectively, is executed on the computer for controlling the computer via movements and gestures of the hands 2 captured by the camera 12. In the control software one of the keys 132 of the keyboard 13 is set as initiating key 133. The initiating key 133 of the keyboard 13 is pressed by a thumb 211 of a left hand 21 of the user in order that the arrow 141 can be moved by moving a right hand 22 of the user while the initiating key 133 is pressed or held, respectively.

In the control software is set that the arrow 141 is to be moved in accordance with a two-dimensional movement 221 of the right hand 22 of the user. Thus, the control software is set to detect the movements 221 of the right hand 22 wherein it could alternatively also be set to detect corresponding movements of the left hand 21 instead. While the initiating key 133 is held the two-dimensional movements 221 of the right hand 22 inside the predefined area are detected by the control software via the camera 12. Thereby, the movements 221 particularly comprise: top-down movements which correspond to movements of the right hand 22 into a direction of a border of the keyboard 13 being far from the screen 11; down-top movements which correspond to movements of the right hand 22 into a direction of a border of the keyboard 13 being close to the screen 11; left-right movements which correspond to movements of the right hand 22 into a direction of a right border of the keyboard 13; and right-left movements which correspond to movements of the right hand 22 into a direction of a left border of the keyboard 13. The control software then translates the two-dimensional movements 221 of the right hand 22 into corresponding movements 142 of the arrow 141. In particular, the top-down movements of the right hand 22 move the arrow 141 into direction of a bottom end of the screen 11; the down-top movements of the right hand 22 move the arrow 141 into direction of a top end of the screen 11; the left-right movements of the right hand 22 move the arrow 141 into direction of right end of the screen 11; and the right-left movements of the right hand 22 move the arrow 141 into direction of left end of the screen 11. In this translation of the control software, movements of the right hand 22 in a third dimension are not considered, particularly movements of the right hand 22 from the top surface of the keyboard 13 away or into direction onto the top surface of the keyboard 13.

Further, the control software implements that while the initiating key 133 is held pressing any one of the other keys 132 of the keyboard 13 is treated as a click signal corresponding to a common mouse click. Thus, for example an index finger 222 of the right hand 22 can perform a click movement 223 to provide click signals such as single clicks or double clicks by hitting any one of the keys 132 other than the initiating key 133. Like this, the right hand 22 can provide the click signals wherever it is positioned over the keyboard 13. Thus, the arrow 141 can conveniently moved and positioned by the movements 221 of the right hand 22 and click signals can conveniently be provided by the click movement 223 of a finger of the right hand 22 such as its index finger 222.

The following applies to the rest of this description. If, in order to clarify the drawings, a figure contains reference signs which are not explained in the directly associated part of the description, then it is referred to previous description sections.

In Fig. 2 the computer control arrangement 1 is shown wherein a window 143 having a scroll bar 144 is displayed in the graphical user interface 14 on the screen 11. The control software is arranged to detect the index finger 222 of the right hand 22 or any other predefined finger. For example, such detection can be performed by evaluating the image frames captured by the camera 12 with regard to nails of the fingers. Further, the control software is arranged to detect a scroll movement 224 of the index finger 222 of the right hand 22, while the initiating key 133 is held. The scroll movement 224 is a top-down or down-top movement of the index finger 222 similar to the corresponding movements of the right hand 22 described above.

For allowing a particularly convenient scrolling of the window 143 on the screen 11, the control software is further arranged to evaluate a speed of the scroll movement 224 of the index finger 222 of the right hand 22 wherein performing the scroll movement 224 quickly induces a fast scrolling of the window 143 on the screen 11. In particular, when a series of scroll movements 224 is performed the control software evaluates if the top-down or the down-top of the scroll movements 224 is faster. Depending on this evaluation, the window 143 is accordingly scrolled downwardly or upwardly.

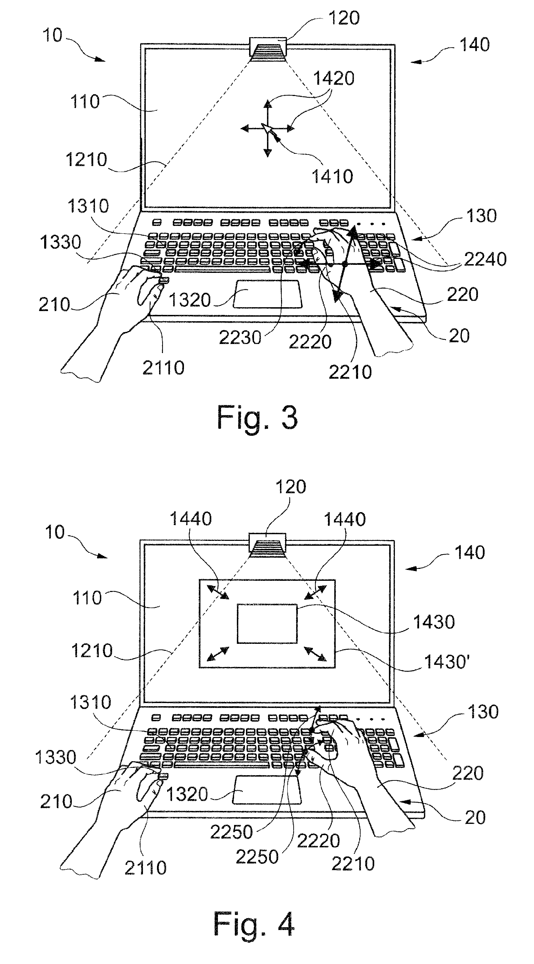

Fig. 3 shows a second embodiment of a computer control arrangement 10 comprising a portable computer or notebook, respectively. The notebook has a screen 110 and a keyboard 130 which are foldably connected to one physical unit. The screen 110 and the keyboard 130 can folded together into a closed state and opened up into an open state as shown in Fig. 3. The keyboard 130 comprises a plurality of keys 1310 and a touchpad 1320. In a top border of the screen 110 a camera 120 is integrally mounted to the screen 110. The camera 120 is adjusted to cover a visual range 1210 of a predefined area including a top surface of the keyboard 130. Above the keyboard 130 hands 20 of a user are visible in Fig. 3 in a position ready for typing or controlling the notebook.

Similar as described with regard to the first embodiment of a computer control arrangement 1, the notebook is arranged to display a graphical user interface (GUI) 140 comprising an arrow 1410. The notebook executes a computer program according to the invention or control software, respectively, for controlling the notebook via movements and gestures of the hands 20 captured by the camera 120. In the control software one of the keys 1320 of the keyboard 130 is set as initiating key 1330. The initiating key 1330 of the keyboard 130 is pressed by a thumb 2110 of a left hand 210 of the user in order that the arrow 1410 can be moved by moving a right hand 220 with a index finger 2210 and a thumb 2220 of the user while the initiating key 1330 is pressed or held, respectively.

As described above in more detail with regard to the first embodiment of the computer control arrangement 1, movements 1420 of the arrow 1410 can be induced by two-dimensional movements 2240 of the right hand 220. Also, click movements 2230 of the index finger 2210 or of any other finger of the right hand 220 or of the left hand 210 can induce click signals by hitting any one of the keys 1310 other than the initiating key 1330.

In Fig. 4 the computer control arrangement 10 is shown wherein a zoomable window 1430 is displayed in the graphical user interface 140 on the screen 110. The control software is arranged to detect the index finger 2210 and the thumb 2220 of the right hand 220. Further, the control software is arranged to detect a zoom movement 2250 of the right hand 220, while the initiating key 1330 is held. As indicated by the corresponding arrows, the zoom movement 2250 is a movement of the index finger 2210 and the thumb 2220 away from each other. When the control software detects such a zoom movement 2250 the window 1430 is zoomed to window 1430' for example.

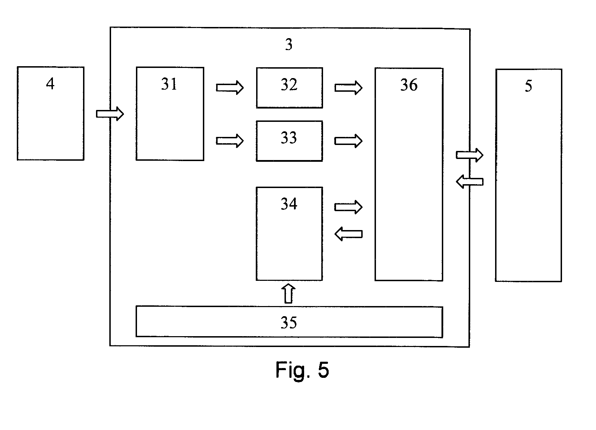

Fig. 5 shows an embodiment of a computer program for controlling a computer or a control software 3, respectively. The control software 3 comprises a detection unit having a frame grabber 31, a hand movement handler 32, a finger movement handler 33 and a keyboard handler 34. The control software further comprises an action unit with an action controller 36 and a settings storage 35. The frame grabber 31 is connected to a camera interface 4 through which it grabs sequences of image frames from a camera in a predefined speed and resolution. The predefined speed and resolution are set in the settings storage 35 and may be adjusted according to the needs of a user.

The frame grabber 35 performs edge detection and pixelization on the single image frames. The hand movement handler 32 and the finger movement handler 33 analyse the sequences of image frames prepared by the frame grabber and send commands to the action controller 36. Simultaneously, the keyboard handler 34 detects key strokes on a keyboard and sends commands corresponding to the detected key strokes and to the predefined settings in the settings storage 35 to the action controller 36. The action controller 36 evaluates the input commands from the hand movement handler 32, the finger movement handler 33 and the keyboard handler 34 and translates the commands to respective operating system or software 5 commands.

While the invention has been illustrated and described in detail in the drawings and foregoing description, such illustration and description are to be considered illustrative or exemplary and not restrictive. It will be understood that changes and modifications may be made by those of ordinary skill within the scope and spirit of the following claims. In particular, the present invention covers further embodiments with any combination of features from different embodiments described above and below. For example, it is possible to operate the invention in an embodiment wherein:
● various other gestures than the scroll and zoom gestures described above can be implemented, or
● the movement of other parts of the body such as the head is evaluated.

The invention also covers all further features shown in the Figs. individually although they may not have been described in the afore or following description. Also, the embodiments described in the figures and the description and single features thereof can be disclaimed from the subject matter of the invention.

Furthermore, in the claims the word "comprising" does not exclude other elements or steps, and the indefinite article "a" or "an" does not exclude a plurality. A single unit may fulfill the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Any reference signs in the claims should not be construed as limiting the scope.

## Claims

1. Method of controlling a computer being operatively connected a keyboard (13; 130) and a screen (11; 110), comprising the steps of
displaying on the screen (11; 110) a graphical user interface (14; 140) having a control symbol (141; 1410),
moving the control symbol (141; 1410) of the graphical user interface (14; 140) on the screen (11; 110), and
detecting a click signal together with an associated click position of the control symbol (141; 1410),
**characterised in that** the method further comprises the steps of providing a camera (12; 120) being operatively connected to the computer, capturing a sequence of image frames of a predefined area by means of the camera (12; 120),
detecting a movement (221; 2240) of a predefined part of a body (22; 220) of a user in two dimensions inside the predefined area by analyzing the sequence of image frames, and
moving the control symbol (141; 1410) of the graphical user interface (14; 140) on the screen (11; 110) in accordance with the detected movement (221; 2240) of the predefined part of the body (22; 220).

2. Method according to claim 1, comprising the step of detecting if a predefined initiating key (133; 1330) of the keyboard (13; 130) is pressed wherein the control symbol (141; 1410) of the graphical user interface (14; 140) is moved on the screen (11; 110) in accordance with the detected movement (221; 2240) of the part of the body (22; 220) only while or after the initiating key (133; 1330) of the keyboard (13; 130) is pressed.

3. Method according to claim 1 or 2, wherein the click signal corresponds to a pressing of any key of a predefined set of keys of the keyboard (13; 130).

4. Method according to claim 3, wherein the click signal corresponds to the pressing of any key of the predefined set of keys of the keyboard (13; 130) only while or after the initiating key (133; 1330) of the keyboard (13; 130) is pressed.

5. Method according to any one of the preceding claims, wherein the predefined part of the body (22; 220) of the user is a hand (22; 220) of the user.

6. Method according to any one of the preceding claims, wherein the predefined area captured by means of the camera (12; 120) comprises a top side of the keyboard (13; 130).

7. Method according to claim 6, comprising the steps of predefining if the control symbol (141; 1410) is to be moved by a left hand or by a right hand, detecting if the hand is left or right prior that the control symbol (141; 1410) of the graphical user interface (14; 140) is moved on the screen (11; 110) and moving the control symbol (141; 1410) of the graphical user interface (14; 140) on the screen (11; 110) in accordance with the detected movement (221; 2240) of the hand (22; 220) being left or right as corresponding to the predefined hand setting.

8. Method according to claim 6 or 7, comprising the steps of detecting a movement (224; 2250) of at least one finger (222; 2210, 2220) of the hand (22; 220) in two dimensions inside the predefined area by analyzing the sequence of image frames, allocating a class to the detected movement (224; 2250) of the at least one finger (222; 2210, 2220) of the hand (22; 220) and initiating a predefined functionality being associated to the allocated class of the detected movement (224; 2250) of the at least one finger (222; 2210, 2220) of the hand (22; 220).

9. Method according to claim 8, wherein the speed of the detected movement (224; 2250) of the at least one finger (222; 2210, 2220) of the hand (22; 220) is evaluated when allocating the class to the detected movement (224; 2250) of the at least one finger (222; 2210, 2220) of the hand (22; 220).

10. Method according to claim 8 or 9, wherein a nail of the at least one finger (222; 2210, 2220) is detected when detecting the movement (224; 2250) of the at least one finger (222; 2210, 2220) of the hand (22; 220) in two dimensions inside the predefined area by analyzing the sequence of image frames.

11. Computer program (3) being adapted to be executed on a computer which is operatively connected to a camera (12; 120), a keyboard (13; 130) and a screen (11; 110), comprising program code adapted to be executed to implement on the computer
a detection unit (31, 32, 33, 34) being adapted to detect a movement (221; 2240) of a of a predefined part of a body (22; 220) of a user in two dimensions inside a predefined area by analyzing a sequence of image frames of the predefined area captured by means of the camera (12; 120), and
an action unit (36) being adapted to move a control symbol (141; 1410) of a graphical user interface (14; 140) displayed on the screen (11; 110) in accordance with the detected movement (221; 2240) of the predefined part of the body (22; 220) and to detect a click signal together with an associated click position of the control symbol (141; 1410).

12. Computer program according to claim 11, wherein the detection unit (31, 32, 33, 34) is adapted to detect if a predefined initiating key (133; 1330) of the keyboard (13; 130) is pressed and to move the control symbol (141; 1410) of the graphical user interface (14; 140) on the screen (11; 110) in accordance with the detected movement (221; 2240) of the predefined part of the body (22; 220) only while or after the initiating key (133; 1330) of the keyboard (13; 130) is pressed.

13. Computer program according to claim 11 or 12, wherein the action unit (36) is adapted to interpret a pressing of any key of a predefined set of keys of the keyboard (13; 130) to be the click signal.

14. Computer program according to claim 13, wherein the action unit (36) is adapted to interpret the pressing of any key of the predefined set of keys of the keyboard (13; 130) to be the click signal only while or after the initiating key (133; 1330) of the keyboard (13; 130) is pressed.

15. Computer program according to any one of claims 11 to 14, wherein the predefined part of the body (22; 220) of the user is a hand (22; 220) of the user.

16. Computer program according to claim 15, comprising program code adapted to be executed to implement a settings storage (35) in which a predefined hand setting is storable defining if the control symbol (141; 1410) is to be moved by a left hand or by a right hand, wherein the detection unit (31, 32, 33, 34) is adapted to detect if the hand (22; 220) is left or right prior that the control symbol (141; 1410) of the graphical user interface (14; 140) is moved on the screen (11; 110) and the action unit (36) is adapted to move the control symbol (141; 1410) of the graphical user interface (14; 140) on the screen (11; 110) in accordance with the detected movement (221; 2240) of the hand (22; 220) being left or right as corresponding to the predefined hand setting.

17. Computer program according to claim 15 or 16, wherein the detection unit (31, 32, 33, 34) is adapted to detect a movement (224; 2250) of at least one finger (222; 2210, 2220) of the hand (22; 220) in two dimensions inside the predefined area by analyzing the sequence of image frames, to allocate a class to the detected movement (224; 2250) of the at least one finger (222; 2210, 2220) of the hand (22; 220) and to initiate a predefined functionality being associated to the allocated class of the detected movement (224; 2250) of the at least one finger (222; 2210, 2220) of the hand (22; 220).

18. Computer program according to claim 17, wherein the detection unit (31, 32, 33, 34) is adapted to detect the speed of the detected movement (224; 2250) of the at least one finger (222; 2210, 2220) of the hand (22; 220) and to evaluate said speed when allocating the class to the detected movement (224; 2250) of the at least one finger (222; 2210, 2220) of the hand (22; 220).

19. Computer program according to claim 17 or 18, wherein the detection unit (31, 32, 33, 34) is adapted to detect a nail of the at least one finger (222; 2210, 2220) when detecting the movement (224; 2250) of the at least one finger (222; 2210, 2220) of the hand (22; 220) in two dimensions inside the predefined area by analyzing the sequence of image frames.

20. Computer control arrangement (1; 10) comprising a computer, a camera (12; 120), a keyboard (13; 130) and a screen (11; 110) wherein the computer is operatively connected to the camera (12; 120), the keyboard (13; 130) and the screen (11; 110), **characterized in that** a computer program (3) according to any one of claims 11 to 19 is executed on the computer.
